# EUROPEAN PATENT SPECIFICATION

(11) **EP 0 479 342 B1**
(45) Date of publication and mention of the grant of the patent: **15.12.1993**
(21) Application number: 91122329.5
(22) Date of filing: 08.09.1987
(51) Int. Cl.: F02B 27/06

(54) **High performance exhaust system for internal combustion engine**
Hochleistungsauspuffanlage für Brennkraftmaschinen
Système d'échappement à haute performance pour moteur à combustion interne

(30) Priority: 13.09.1986 JP 215043/86
(43) Date of publication of application: 08.04.1992
(62) Divisional of application: 87113132.2
(73) Proprietor: Yamaha Motor Co., Ltd., Iwata 438 (JP)
(72) Inventor: Kitta, Hideaki, Iwata-shi, Shizuoka-ken (JP)
(74) Representative: Grünecker, Kinkeldey, Stockmair & Schwanhäusser Anwaltssozietät

(56) References cited:
- EP-A- 0 278 032
- EP-A- 0 278 033
- US-A- 2 862 490
- US-A- 3 453 824
- PATENT ABSTRACTS OF JAPAN vol. 11, no. 175 (M-596)(2622) 5 June 1987 & JP-A-62 007 924 (HONDA) 14 January 1987
- PATENT ABSTRACTS OF JAPAN vol. 11, no. 347 (M-641)(2794) 13 November 1987 & JP-A-62 126 222 (YAMAHA) 8 June 1987
- AUTOMOTIVE ENGINEERING vol. 95, no. 6, 1 June 1987, WARRENDALE US pages 95 -96; J. YAMAGUCHI: 'Motorcycle innovations'

## Description

The present invention relates to an internal combustion engine having a combustion chamber, an exhaust port for discharging exhaust gases from said combustion chamber, an exhaust pipe extending from said exhaust port for conveying exhaust gases therefrom, and an expansion chamber, being in communication with said exhaust pipe (compare e.g. with US-A-3453824).

It is known that, in four- and two-cycle engines, exhaust gases are intermittently led into exhaust valves, thereby producing the inertial and pulsating effects of exhaust gases in the exhaust pipes. The effects (termed dynamic effects) vary with the engine speed. Therefore, should the dynamic effects be maximized to increase a volumetric efficiency at a certain speed of revolution, the dynamic effects may counteract to excessively lower the volumetric efficiency at other speeds of revolution. There has been such a problem, therefore, that if specifications (exhaust pipe length and exhaust pipe) of the exhaust device are set to obtain the optimum dynamic effects within the range of high speeds, an excessive decrease in torque (torque valley) within the medium speed range results.

It is, therefore, considered to provide an exhaust control valve for changing the area of exhaust flow path in the vicinity of the open end of the exhaust pipe connected to the expansion chamber, so that the area of flow path will decrease within the speed range in which the volumetric efficiency decreases, and that the area of flow path will increase within other speed range.

In a multiple-cylinder engine, should the exhaust pipes be joined on the downstream side in the expansion chamber, a lowered volumetric efficiency and a decreased torque may result due to exhaust interference among the cylinders. In order to cope with this problem, therefore, it is considered to provide an exhaust control valve in each exhaust pipe and to reduce the area of te exhaust flow path by closing the control valve within the speed range in which there occurs an adverse effect due to the presence of the exhaust interference.

It is also considered to insert an exhaust control valve in the exhaust pipe to improve combustion by controlling the back pressure or to control exhaust gas component by controlling self EGR (Exhaust Gas Recirculation).

As stated above, it is considered to provide, in exhaust pipes, exhaust control valves which change the area of exhaust flow path for various purposes such as improvements in the volumetric efficiency and combustion, and control of exhaust gas component. In a multiple-cylinder engine having a plurality of exhaust pipes, however, there will be such a problem that an exhaust control valve must be inserted in each exhaust pipe, and individual control of each exhaust pipe will complicate the exhaust device.

Also, when the valve shafts of each exhaust control valve are in common use, there will take place such a disadvantage that the valve shaft greatly extends with heat, and furthermore, the method of arrangement of exhaust pipes is restricted depending upon the location of the exhaust pipes, diminishing design freedom in determining the location of the exhaust pipes.

The present invention has the object to improve the volumetric efficiency of an internal combustion engine, especially within a medium speed range.

This object is solved by the subject matter of claim 1.

The positive pressure wave produced by opening the exhaust valve of an internal combustion engine spreads at a speed of sound within the exhaust pipe, rapidly expanding at its open end to generate a negative pressure wave, which spreads in the reverse direction at a speed of sound within the exhaust pipe back into the exhaust valve of the engine. If the adjustable reflective means is kept closed, the positive pressure wave produced by the opening of the exhaust valve is reflected by this reflective means, flowing as a positive pressure wave back at a speed of sound to the exhaust valve. Accordingly, when the adjustable reflective means is controlled so as to reduce the area of the exhaust flow path to one-half, the sum of the negative pressure wave which is generated at the open end of the exhaust pipe, and the positive pressure wave reflected by the relective means, will be zero. In this case, the pulsating effect is eliminated and therefore the lowering of the volumetric efficiency (generation of a torque valley) within the medium speed range can be restricted.

The invention is now further described by reference to the attached drawings.

### BRIEF DESCRIPTION OF THE DRAWINGS:

Fig. 1 is a front view of an exhaust system of a motorcycle as one embodiment of the present invention;
Fig. 2 and Fig. 3 are a side view and a plan view thereof;
Fig. 4 is a side view of a motorcycle using this exhaust system;
Fig. 5 is a side sectional view of an exhaust control valve assembly;
Fig. 6 is a sectional view taken along the line of VI-VI; and
Fig. 7 and Fig. 8 are a plan view and a left side view respectively.
Fig. 9 and Fig. 10 are views showing exhaust control valve arrangement of other embodiments.

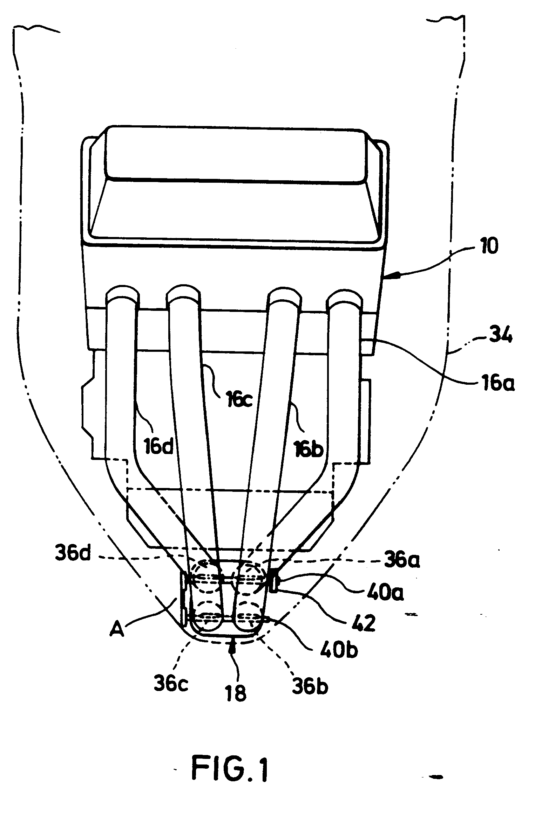

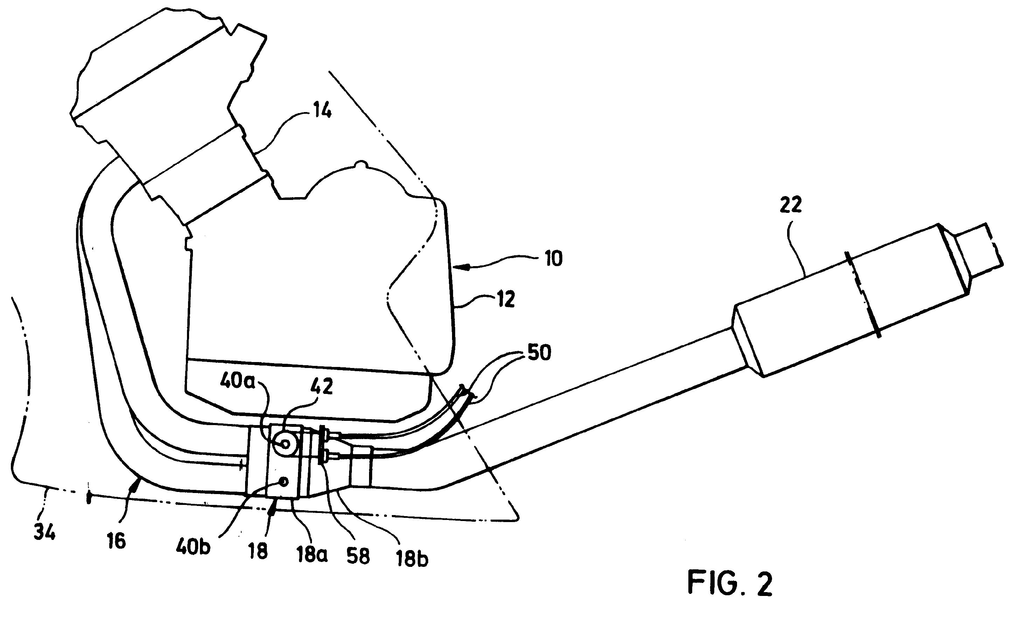

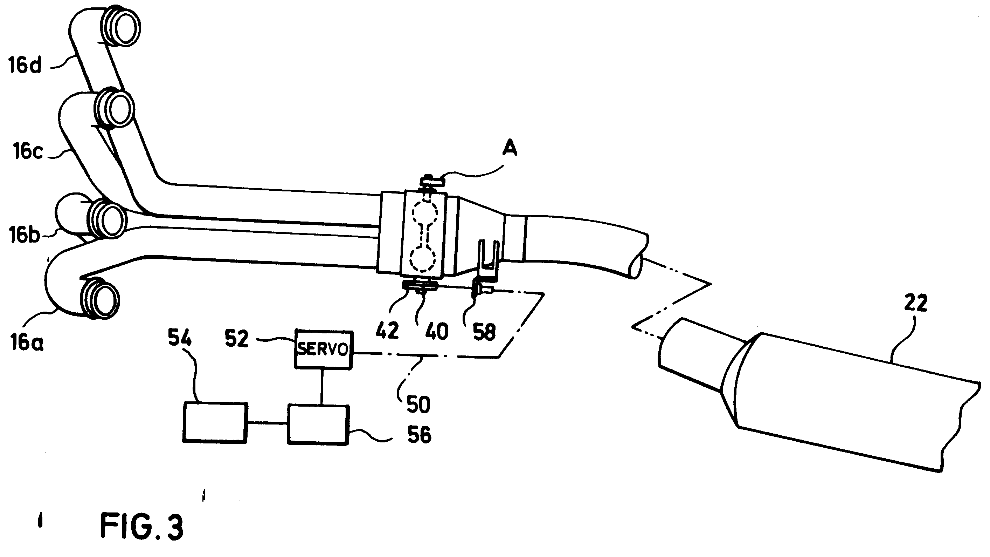

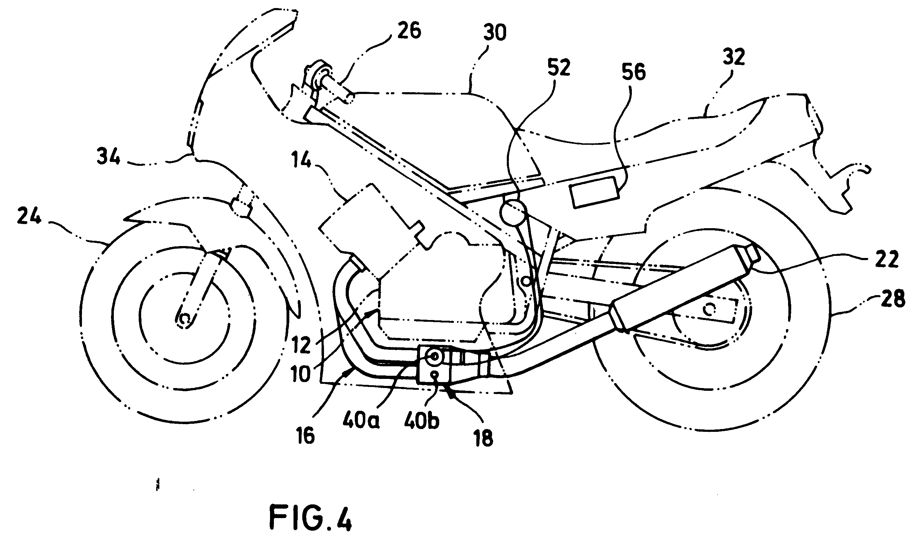

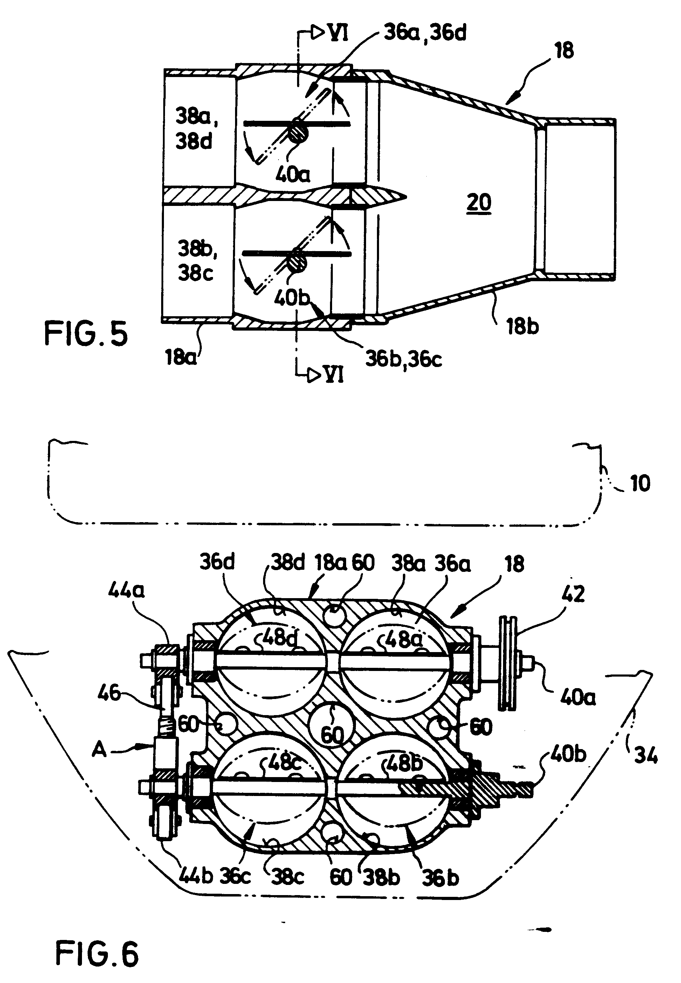

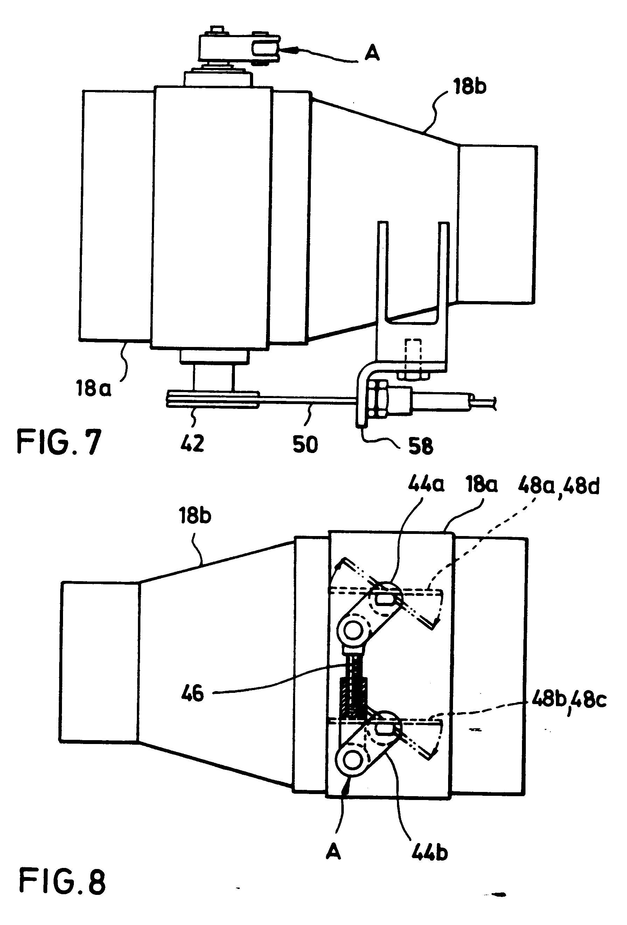

Fig. 1 is a front view of the exhaust system of a motorcycle shown in one preferred embodiment of the present invention; Figs. 2 and 3 are a side view and a plan view thereof; Fig. 4 is a side view of a motorcycle using this exhaust system; Fig. 5 is a side sectional view of an exhaust control valve assembly; Fig. 6 is a sectional view taken along line VI-VI thereof; and Figs. 7 and 8 are a plan view and a left side view.

In Fig. 4, numeral 10 is a four-cycle four-cylinder engine mounted in the vicinity of the center of a motorcycle body. This engine 10 has a cylinder 14 extending obliquely upwardly from the crankcase 12. The exhaust system is provided with four exhaust pipes 16 (16a - 16d) extending from the front of the cylinder 14 to under the crankcase 12, an exhaust control valve assembly 18 which is connected at the rear end of these exhaust pipes 16 and collects exhaust gases, and one muffler 22 which leads the exhaust gases collected in an expansion chamber 20 of this exhaust control valve assembly 18 (see Fig. 5).

In Fig. 4, 24 is a front wheel, 26 is a handlebar, 28 is a rear wheel, 30 is a fuel tank cover, and 32 is a saddle. Furthermore, 34 is a fairing which covers the aforesaid engine 10, exhaust pipes 16, and the right and left sides and lower part of the exhaust control valve assembly 18.

The exhaust control valve assembly 18 has a plurality of butterfly exhaust control valves 36 (36a - 36d) which change the area of exhaust passage of each exhaust pipe 16. Namely, this assembly 18 has a body 18a having round bores (38a - 38d) communicating to each exhaust pipe 16 and forming a regular square at center; a manifold 18b forming the aforesaid expansion chamber 20; two valve shafts 40a, 40b mounted non-coaxially and horizontally through the round bores 38a, 38d in the upper stage and the round bores 38b, 38c in the lower stage; a pulley 42 as a rotation input member fixed at the right end of the valve shaft 40a; levers 44a, 44b fixed at the left end of both valve shafts 40a, 40b; and a link 46 connecting the rotating ends of both levers 44a, 44b. Namely, the lever 44 and the link 46 combine to form a link mechansim A as a rotation transmission mechanism which synchronously turns both valve shafts 40. On each of the valve shafts 40 are fixed round valve plates 48 (48a - 48d), which are positioned in each of the round bores 38.

The pulley 42 fixed on the right end of the valve shaft 40a is forced to turn in either direction by a servo motor 52 through a wire 50 (See Fig. 3.). This servo motor 52 is so controlled by a control circuit 56 as to close each control valve 36 within a speed range in which the volumetric efficiency lowers and to open within other speed range, in accordance with an engine speed detected for example from an ignition device 54.

Therefore, when the diameter and length of the exhaust pipes 16 are set such that the volumetric efficiency will increase within the high-speed range of the engine 10, the control circuit 56 drives the servo motor 52 so that the exhaust control valve 36 will be closed in the medium and low speed ranges. The exhaust control valves in the lower stage 36b, 36c are controlled to open to the same opening within the range of about 45 degrees (See Figs. 5 and 8) by the link mechanism A simultaneously with the exhaust control valves in the upper stage 36a, 36d.

The positive pressure wave produced by opening the exhaust valve of the engine 10 spreads at a speed of sound within the exhaust pipe 16, rapidly expanding at its open end to generate a negative pressure wave, which spreads in the reverse direction at a speed of sound within the exhaust pipe 16 back into the exhaust valve of the engine 10. If the exhaust control valve 36 located near this open end is kept closed, the positive pressure wave produced by the opening of the exhaust valve is reflected by this exhaust control valve 36, flowing as a positive pressure wave back at a speed of sound to the exhaust valve. Accordingly, when the exhaust control valve 36 is controlled so as to reduce the area of the exhaust flow path to one half, the sum of the negative pressure wave which is generated at the open end of the exhaust pipe and flows back, and the positive pressure wave refleclteld by the exhaust control valve 36, will be zero. In this case the pulsating effect is eliminated, and therefore the lowering of the volumetric efficiency (generaqtion of a torque valley) within the medium speed range can be restricted.

To use this exhaust control valve 36 for the purpose of preventing the lowering of torque by exhaust interference among cylinders, this exhaust control valve 36 is closed within a speed range in which excessive lowering of torque caused by exhaust gas interference takes place. When closing this exhaust control valve 36 within the low-speed range, the exhaust control valve that the area of exhaust flow path can be throttled by about 70 percent, or to reduce the opening to about 30 percent, can be used.

The outer tube of the wire 50 is held by an outer bracket 58 fixed on the manifold 18b (See Fig. 7). The body 18a is desired to be provided with a lightening hole 60 of suitable size in a suitable position in order to decrease thermal deformation of the body 18a (Fig. 6).

This preferred embodiment applies the present invention to motorcycles, with exhaust pipes 16a and 16d, and 16b and 16c arranged in two stages, upper and lower, under the engine 10; accordingly it is possible to reduce the width of the exhaust system under the engine and to increase the bank angle of the vehicle body.

Since the pulley 42 is mounted on the valve shaft 40a in the upper stage, the wire and the outer bracket of the wire are set in high positions; therefore the width of the lower part of the exhaust control valve assembly 18 can be held to a small size. Accordingly, a great bank angle can be maintained even when a fairing for covering them is mounted.

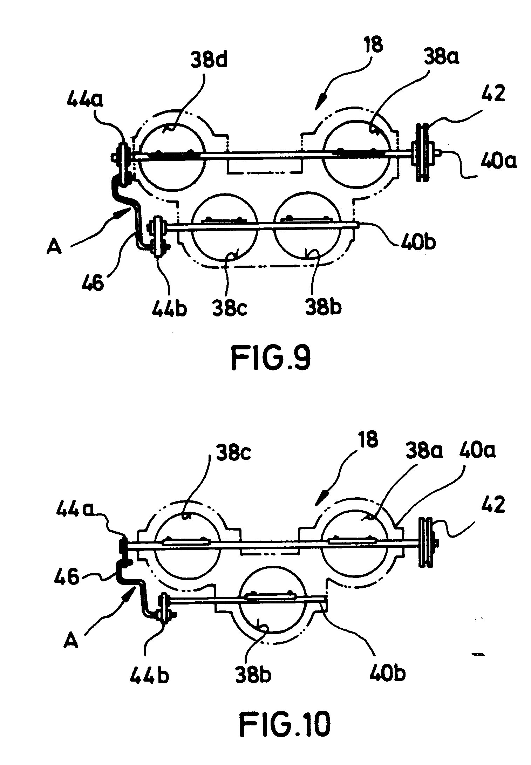

Fig. 9 and Fig. 10 are views showing the arrangement of each exhaust control valve 36 of other embodiments. These embodiments, as the aforementioned embodiment, are intended to arrange the exhaust control valve 36 under the engine of a motorcycle. In the embodiment in Fig. 9, round bores 38b, 38c in the lower stage of the four round bores 38 are disposed close to the center of the width direction of the engine 10, while the round bores 38a, 38d in the upper stage are positioned in the outer side. In the embodiment in Fig. 10, the round bores 38b in the lower stage of round bores 38 are disposed outside of the round bores 38a, 38c in the upper stage. According to these embodiments, inasmuch as the exhaust pipes in the lower stage can be positioned in a higher place than the embodiments shown in Figs. 1 through 8, the greater bank angle of vehicle than the aforementioned embodiments shown in Figs. 1 through 8 can be maintained, thus further improving the turning performance. In these Figs. 9 and 10, the same numerals are used for corresponding parts shown in Fig. 6, the description of which, therefore, will not be repeated.

In each of the aforementioned embodiments, the exhaust control valves 36, mounted in the vicinity of the open end of the exhaust pipe 16 to the expansion chamber 20, may be connected at other position of the exhaust pipe 16 according to the purpose of the exhaust control valve. For instance, if it is for the purpose of back pressure control and self EGR, it is desirable to mount the exhaust control valve in a position near the engine 10. Also, the exhaust control valve may be disposed adjacent to the downstream side of the open end of the exhaust pipe 16.

Furthermore, if the exhaust control valves in the upper stage are moved back and forth of the exhaust valves in the lower stage, it will become possible to mount a suitable exhaust control valve 36 in the optimum position by adjusting it back or forth in accordance with a difference in length of each exhaust pipe 16 caused by treatment. Besides, it is possible to eliminate interference between the engine and the exhaust control valve by changing the position of each exhaust pipe in the width direction, thereby largely increasing the freedom of design.

Although the rotation transmission mechanism is desired to be of a link construction, it is understood that also gears may be used to interconnect each valve shaft. This rotation transmission mechanism, as described in the embodiment, may be mounted not only on the end of the valve shaft 40 on the opposite side of the pulley 42 but on the same side as the rotation input member as a pulley. The rotation input member may be not only the pulley but other member such as a lever.

## Claims

1. An internal combustion engine having a combustion chamber, an exhaust port for discharging exhaust gases from said combustion chamber, an exhaust pipe (16) extending from said exhaust port for conveying exhaust gases therefrom, and an expansion chamber (20), said exhaust pipe having an end in communication with said expansion chamber (20) and into which said exhaust pipe discharges,
**characterized by**
reflective means (36) adjustable positioned in confronting relation to the end of said exhaust pipe (16) for providing a variable reflective area at the end of said exhaust pipe upon which acoustic waves in the exhaust gases in said exhaust pipe will reflect for reducing the pressure at said exhaust port, and selectively operable means (52,40) for adjusting said reflective means effective area in response to an engine condition.

2. An exhaust control device according to claim 1,
**characterized in that**
said internal combustion engine includes at least three exhaust pipes.

3. An internal combustion engine according to claim 1 or 2,
**characterized in that**
said internal combustion engine is a four-cycle four-cylinder engine.

4. An internal combustion engine according to one of the preceding claims,
**characterized in that**
the reflective means is controlled so as to reduce the area of the exhaust flow path to one-half.

## Patentansprüche

1. Verbrennungskraftmaschine mit innerer Verbrennung, welche eine Brennkammer aufweist, einen Auspuffauslaß, um Auspuffgase aus dieser Brennkammer auszubringen, ein Auspuffrohr (16), welches sich von diesem Auspuffauslaß aus erstreckt, um Auspuffgase davon wegzufördern, und eine Ausdehnungskammer (20), wobei dieses Auspuffrohr mit einem Ende in Verbindung mit dieser Ausdehnungskammer steht, und welche dieses Auspuffrohr ausbringt,
**gekennzeichnet durch**
Reflektionsmittel (36), die einstellbar gegenüberliegend dem Ende dieses Auspuffrohres angeordnet sind, um eine variable Reflektionsfläche an dem Ende dieses Auspuffrohres zu ergeben, an welche akustische Wellen in den Auspuffgasen in diesem Auspuffrohr reflektiert werden, um den Druck an diesem Auspuffauslaß zu reduzieren, und wahlweise betätigbare Mittel (52, 40), um die effektive Fläche dieser Reflektionsmittel in Reaktion auf eine Betriebsbedingung in der Maschine einzustellen.

2. Eine Auspuffsteuereinrichtung gemäß Anspruch 1, **da****durch gekennzeichnet,** daß diese Brennkraftmaschine mit innerer Verbrennung zumindest drei Auspuffrohre beinhaltet.

3. Brennkraftmaschine gemäß Anspruch 1 oder 2, **dadurch** **gekennzeichnet,** daß diese Brennkraftmaschine mit innerer Verbrennung eine Vier-Takt-Vierzylindermaschine ist.

4. Brennkraftmaschine mit innerer Verbrennung gemäß einem der vorstehenden Ansprüche, **dadurch gekennzeichnet**, daß das Reflektionsmittel derart gesteuert wird, daß die Fläche der Auspuffströmung um eine Hälfte reduziert wird.

## Revendications

1. Moteur à combustion interne présentant une chambre de combustion, un orifice d'échappement pour évacuer des gaz d'échappement de ladite chambre de combustion, un tuyau d'échappement (16) s'étendant depuis ledit orifice d'échappement, pour transporter des gaz d'échappement depuis ce dernier, et une chambre d'expansion (20), ledit tuyau d'échappement présentant une extrémité placée en communication avec ladite chambre d'expansion (20) et dans laquelle le dit tuyau d'échappement débouche,
caractérisé par un moyen réfléchissant (36), disposé de façon réglable dans une relation de vis-à-vis à l'extrémité du tuyau d'échappement (16), pour fournir une aire réfléchissante variable à l'extrémité du tuyau d'échappement, sur laquelle des ondes acoustiques présentes dans les gaz d'échappement situés dans ledit tuyau d'échappement vont se réfléchir pour réduire la pression régnant audit orifice d'échappement, et des moyens (52, 40), fonctionnant de façon sélective, pour régler l'aire efficace desdits moyens réfléchissants en réponse à un état du moteur.

2. Dispositif de commande d'échappement selon la revendication 1, caractérisé en ce que ledit moteur à combustion interne comprend au moins trois tuyaux d'échappement.

3. Moteur à combustion interne selon la revendication 1 ou 2, caractérisé en ce que ledit moteur à combustion interne est un moteur à quatre temps et à quatre cylindres.

4. Moteur à combustion interne selon l'une quelconque des revendications précédentes, caractérisé en ce que le moyen réfléchissant est commandé de manière à réduire de moitié l'aire de la trajectoire d'écoulement de gaz d'échappement.
